# EUROPEAN PATENT SPECIFICATION

(11) **EP 4 059 789 B1**
(45) Date of publication and mention of the grant of the patent: **28.08.2024**
(21) Application number: 21162663.5
(22) Date of filing: 15.03.2021
(51) Int. Cl.: B60T 8/17, B60T 8/32, B60T 13/66, B60T 17/22

(54) **BRAKING SYSTEM, COMPUTER-IMPLEMENTED METHOD OF DECELERATING A RAIL VEHICLE, COMPUTER PROGRAM AND NON-VOLATILE DATA CARRIER**
BREMSSYSTEM, COMPUTERIMPLEMENTIERTES VERFAHREN ZUM ABBREMSEN EINES SCHIENENFAHRZEUGS, COMPUTERPROGRAMM UND NICHTFLÜCHTIGER DATENTRÄGER
SYSTÈME DE FREINAGE, PROCÉDÉ MIS EN UVRE PAR ORDINATEUR DE DÉCÉLÉRATION D'UN VÉHICULE FERROVIAIRE, PROGRAMME INFORMATIQUE ET SUPPORT DE DONNÉES NON VOLATILES

(43) Date of publication of application: 21.09.2022
(73) Proprietor: Dellner Bubenzer Aktiebolag, 781 70 Borlänge (SE)
(72) Inventor: PRIM, Viktor, 81161 Sandviken (SE)
(74) Representative: Brann AB

(56) References cited:
- DE-A1- 10 332 034
- DE-A1- 102012 217 830
- US-A1- 2020 361 433

## Description

### TECHNICAL FIELD

The present invention relates generally to deceleration control of rail vehicles. Especially, the invention relates to a braking system for a rail vehicle containing two or more railroad cars, and a computer-implemented method of decelerating such a rail vehicle. The invention also relates to a computer program and a non-volatile data carrier storing such a computer program.

### BACKGROUND

A rail vehicle's brakes are employed to control the deceleration of the rail vehicle and to implement a parking brake function. Typically, the same brakes are used both for service braking and emergency braking. Traditional rail vehicle brakes are dependent on a load input, i.e. data reflecting the weights of each railroad car. Today's rail vehicles are often regulated using compressed air, known as pneumatically regulated brakes. One disadvantage of such pneumatic brakes is that they cannot be regulated quickly. Due to the slow regulation, the system is dependent on knowing a gross weight reflecting the load on the individual bogies of the rail vehicle. The brakeforce is applied in relation to the load, and inter alia represents an important input to various anti-slip and anti-wheel-lock mechanisms. Nevertheless, in general, more load translates into a higher brake force.

US 2002/0088673 discloses an apparatus and method for incorporating a feedback mechanism into a train railcar wheel braking system to regulate applied braking force. The feedback mechanism provides information to an electronically controlled pneumatic braking system sufficient to detect impending wheel slip or skid. Responsive to the wheel slip/skid information, a brake control processor modulates the braking force applied to the train railcar wheel system to enable the braking system to apply a braking force without damaging the railcar wheel system or rails over which the railcar wheels are traveling.

US 2010/0078991 describes a brake device for braking a vehicle has a brake surface which is rotationally fixedly connected to a wheel axle of the vehicle, a brake lining which can be pressed with a braking force against the brake surface and an actuating element coupled to a control unit, for generating the braking force. The control unit is connected to a speed sensor for measuring a speed of the vehicle and is set up to adjust the braking force in dependence on the speed. The brake device has as high a braking force as possible which is introduced into the brake surfaces. The control unit is coupled to the actuating element via a device for continuous pressure adjustment, so as to enable a continuous adaptation of the braking force to the present speed in each case. The braking force is advantageously adjusted inversely proportionally to the speed of the vehicle.

US 2020/0198605 shows a microcomputer-controlled electromechanical braking system comprises an electromechanical braking control device and an electromechanical braking unit. The electromechanical braking control device comprises a braking microcomputer control unit, an electromechanical control unit and a standby power supply module. The braking microcomputer control unit receives a braking instruction signal sent by a driver or an automatic driving system, performs the calculation of a target braking force and braking management, and at the same time, can communicate with braking microcomputer control units of other vehicles in a train group.

US 2020/361433A1 shows a system for near-simultaneous and dynamically proportional braking of individual rail cars of a train.

Thus, solutions are known for producing continuously adapted braking forces during braking, for instance aiming at avoiding wheel slip. The prior art also contains examples of braking systems where control units in different railroad cars of a train vehicle communicate with one another to improve the braking performance. Common for the known solutions is that they all rely on load information to control the braking operations. This means that, in one way or the other, the weight of each railroad car forms a basis for how different brakes are applied. However, the load information is an unreliable parameter because imperfect scales provide inaccurate measures, and the bogie loads may vary during travel as passengers may walk between the railroad cars.

### SUMMARY

The object of the present invention is therefore to offer a solution that solves the above problem and enables efficient, safe and reliable braking of a rail vehicle without having to consider load information.

According to one aspect of the invention, the object is achieved by a braking system for a rail vehicle having at least two railroad cars, which braking system contains a number of control units, a number of brake actuators and a number of brake units. At least one control unit is arranged in each one of the railroad cars. Each of the control units is configured to receive a brake input signal, and in response thereto generate a respective control signal. The brake input signal may for example be generated in response to a service brake command issued by an operator, an emergency brake command issued manually or automatically, or a parking brake command issued manually or automatically. Further, at least one brake actuator is arranged in each railroad car, and each brake actuator is configured to receive the control signal generated by a control unit in the same railroad car as the brake actuator. Based on the received control signal, the brake actuator is configured to produce a brake-force signal. Each brake unit contains a pressing member and a rotatable member being mechanically linked to at least one wheel of one of the railroad cars. Each brake unit is configured to receive the brake-force signal produced by the brake actuator in the same railroad car as the brake unit. In response to the brake-force signal, the brake unit is configured to cause the pressing member to apply a braking force to the rotatable member so as to reduce a rotation speed of the at least one wheel. Moreover, in addition to the brake input signal, each control unit is configured to generate the control signal on the basis of at least one motion parameter expressing a respective movement of each of the railroad cars.

The above braking system is advantageous because it enables fast and individually adapted control of the brakes in each railroad car. Not only does this, in turn, translate into a low degree of jerk in the rail vehicle, it also allows each individual railroad car to utilize its full brake potential. Consequently, a shortest possible brake distance is attainable. The system further obtains a faster response time than a traditional load-based system, which results in less wheel flats. Since the braking system is well suited for electric/optic control, it is lighter than a traditional brake system being controlled based on pneumatic/hydraulic control. It should be noted, however, that nothing precludes that the braking system according to the invention is applied to pneumatically/hydraulically controlled brakes.

According to one embodiment of this aspect of the invention, the rail vehicle contains a first communication bus, e.g. of an electronic or optic format, configured to feed the brake input signal to each of the railroad cars. The first communication bus may either be fed in parallel to all the control units, be fed in series from one control unit to the other, or be fed to the control unit according to a hybrid series and parallel format, such as in parallel to each railroad car and in series between different control units within a railroad car. Nevertheless, the first communication bus enables reliable and speedy distribution of the brake input signal in the entire rail vehicle.

According to another embodiment of this aspect of the invention, each of the railroad cars contains at least one accelerometer configured to produce at least one vector signal representing an acceleration in at least one dimension of the railroad car in which the at least one accelerometer is placed, for example lengthwise the railroad car. The at least one vector signal expresses the respective movement of the railroad car on the further basis upon which the brake input signal is produced. Consequently, the at least one control unit is configured to receive the at least one vector signal, and based thereon generate the control signal. This is advantageous because such acceleration data form a solid basis for assigning adequate braking forces in the respective railroad cars.

According to yet another embodiment of this aspect of the invention, alternatively or in addition to producing the above-mentioned at least one vector signal, each of the least two railroad cars contains at least one a rotational speed sensor configured to produce at least one speed signal representing a respective speed of a wheel of the railroad car containing the at least one a rotational speed sensor. Thus, the rotational speed sensor may for example be arranged on a wheel and/or an axle of the railroad car. In any case, the at least one speed signal expresses the movement of the railroad car; and analogous to the above, the control unit is configured to receive the at least one speed signal, and based thereon generate the control signal. Such speed measurements are advantageous because the wheel speed constitutes a firm basis for assigning adequate braking forces in the respective railroad cars.

According to still another embodiment of this aspect of the invention, each of the control units is configured to: receive at least one of the at least one motion parameter expressing the respective movement of each other railroad car comprised in the rail vehicle; determine an average motion parameter based on the at least one received motion parameter and an own motion parameter expressing the movement the railroad car in which said respective one control unit is comprised; and generate the control signal such that it causes the brake actuator controlled by the respective one control unit to produce a respective brake-force signal to the at least one brake unit causing the at least one pressing member to apply an increased braking force, if the own motion parameter expresses that the movement of the railroad car has a magnitude larger than what is expressed by the average motion parameter. In other words, the braking force will be increased for a railroad car having an above-average magnitude of motion. Provided that the applied braking force is repeatedly updated at short intervals, this vouches for a short braking distance and a relatively low degree of jerk.

Preferably, each of the control units is further configured to generate the control signal such that it causes the brake actuator controlled by the respective one control unit to produce a respective brake-force signal to the at least one brake unit causing the at least one pressing member to apply a decreased braking force, if the own motion parameter expresses that the movement of the railroad car has a magnitude smaller than what is expressed by the average motion parameter. Thereby, the overall degree of jerk may be reduced further.

Moreover, it is preferable if each of the control units is configured to generate the control signal such that it causes the brake actuator controlled by the respective one control unit to produce a respective brake-force signal to the at least one brake unit causing the at least one pressing member to apply a maintained braking force, should the own motion parameter express that the movement the railroad car has a magnitude equal to what is expressed by the average motion parameter. Although, in practice, this may be unusual, such a strategy is likewise beneficial with respect to attaining a low degree of jerk during braking.

According to another embodiment of this aspect of the invention, the rail vehicle contains a second communication bus configured to exchange the motion parameters between the railroad cars, which motion parameters express the respective movements of the railroad cars included in the rail vehicle. The second communication bus may either be separate from the first communication bus physically and/or logically, or form a physically integrated part thereof and/or form a logically integrated part thereof. In any case, a bus format is generally preferred because it provides an efficient means of exchanging data between the different railroad cars.

According to yet another embodiment of this aspect of the invention, each of the railroad cars in the rail vehicle contains at least one respective battery unit, which is configured to provide electric energy to the control units and the brake actuators positioned in the same railroad car as the least one respective battery unit. A respective one of the least one battery unit may be comprised in or be co-located with each control unit, or two or more control units and/or two or more brake actuators may share a common battery unit. In the latter case, the battery unit is preferably not integrated into a control unit. However, from a technical point-of view, this is not excluded either. In any case, the battery units provide an important back-up source of energy for effecting the braking functionality in case a main electric supply to the braking system is broken.

Preferably, each of the railroad cars also contains at least one battery charger configured to charge the at least one respective battery unit during operation of the rail vehicle so as to ensure that the at least battery unit is operative when needed.

In a braking system comprising pneumatically/hydraulically controlled brakes, accumulator tanks holding pressurized gas/fluid may serve as replacements for batteries to provide emergency brake functionality in case of a malfunctioning brake control system.

According to still another embodiment of this aspect of the invention, each of the at least one wheel whose rotation speed one of the brake actuators is configured to cause to reduce is a wheel whose rotation is monitored by a measurement module configured to produce a slip signal reflecting a degree of slip of the at least one wheel. Each of the brake actuators is configured to receive the slip signal, and if the degree of slip exceeds a threshold value, the brake actuator is configured to produce the brake-force signal such that the brake unit causes the pressing member to apply a braking force to the rotatable member, which braking force is lower than a braking force designated by the received control signal. Consequently, the risk of wheel slip/lock may kept low. This, in turn, is beneficial with respect to braking distance as well as to avoid so-called flat spots or wheel flats.

According to another aspect of the invention, the object is achieved by a computer-implemented method of decelerating a rail vehicle including at least two railroad cars, each of which contains: at least one control unit, at least one brake actuator and at least one brake unit. The method involves: receiving a brake input signal in each of the control units; generating, in each of the control units, a respective control signal in response to the brake input signal; and receiving each of the respective control signals in one of the brake actuators in the same railroad car as the control unit which produced the control signal is positioned. Further, the method involves: producing, in each of the brake actuators, a respective brake-force signal based on the control signal; receiving each of the respective brake-force signals in one of the brake units in the same railroad car as the brake actuator which produced the brake-force signal is positioned, and causing, in each brake unit, a pressing member to apply a braking force to the rotatable member so as to reduce a rotation speed of at least one wheel of at least one railroad car in response to the brake-force signal. Specifically, the method involves, generating in each of the control units, the respective control signal on the further basis of at least one motion parameter expressing a respective movement of each of the railroad cars. The advantages of this method, as well as the preferred embodiments thereof are apparent from the discussion above with reference to the proposed control unit. According to a further aspect of the invention, the object is achieved by a computer program according to claim 23. According to another aspect of the invention, the object is achieved by a non-volatile data carrier containing the above computer program.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: schematically illustrates a rail vehicle in which one embodiment of the system according to the invention is implemented;
- Figure 2a: shows an accelerometer for registering railroad car movements according to one embodiment of the invention;
- Figure 2b: shows sensors for registering railroad car movements in the form of a wheel speed and a wheel slip according to embodiments of the invention;
- Figure 3: shows a block diagram of a control unit according to one embodiment of the invention;
- Figure 4: shows a block diagram of a brake actuator according to one embodiment of the invention; and
- Figure 5: illustrates, by means of a flow diagram, the method according to a preferred embodiment of the invention.

### DETAILED DESCRIPTION

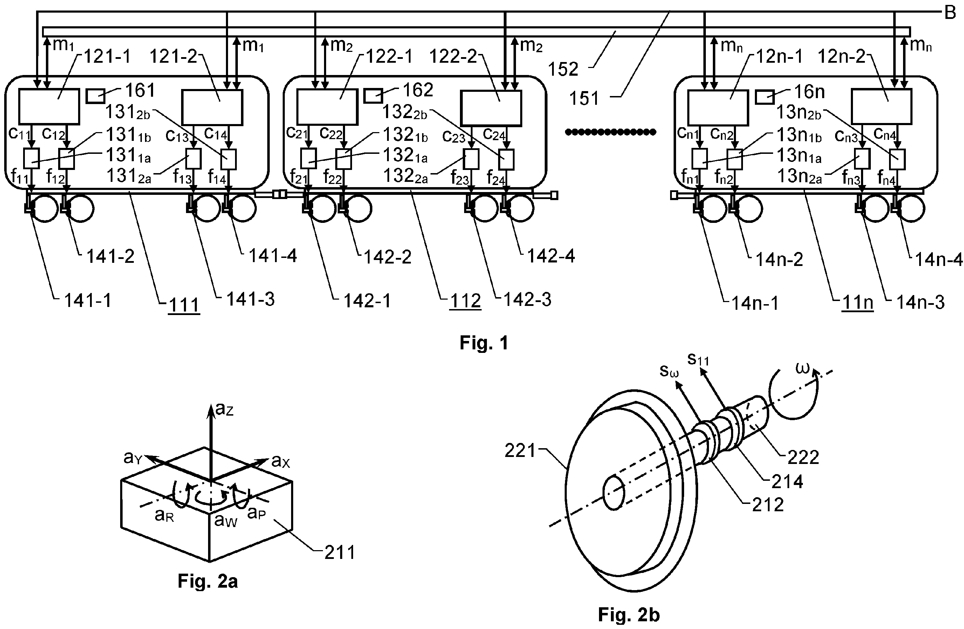

In Figure 1, we see a schematic illustration of a rail vehicle in which one embodiment of the invention is implemented.

The rail vehicle contains at least two railroad cars, here exemplified by 111, 112 and up to 11n, where n may designate any number from say 3 to 200. The rail vehicle is equipped with a braking system, which, in turn, includes: a number of control units 121-1, 121-2, 122-1, 122-2, 12n-1 and 12n-2; a number of brake actuators 131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ and 13n_{2b}; and a number of brake units 141-1, 141-2, 141-3, 141-4, 142-1, 142-2, 142-3, 142-4, 14n-1, 14n-2 14n-3 and 14n-4.

The control units 121-1, 121-2, 122-1, 122-2, 12n-1 and 12n-2 arranged in the railroad cars 111, 112 and 11n so that there is at least one control unit in each railroad car, for example one per railroad car or one per bogie of each railroad car.

In any case, each control unit is configured to receive a brake input signal B designating a braking action to be effected. For instance the brake input signal B may have been generated in response to a service brake command, an emergency brake command or a parking brake command. Each of these commands may, in turn, be produced manually (i.e. by a human operator), or automatically by safety and/or comfort mechanisms in the rail vehicle.

The brake input signal B may be fed in parallel to all the railroad cars 111, 112 and 11n as illustrated in Figure 1, or be fed in series to the railroad cars 111, 112 and 11n, for example first to the railroad car 111; then from the railroad car 111 to the second railroad car 112, and so on. Alternatively, the brake input signal B may be fed to the railroad cars 111, 112 and 11n in a hybrid parallel and series manner, where for example the brake input signal B reaches all the railroad cars 111, 112 and 11n in parallel, however within each railroad car, the brake input signal B can be distributed in series from one control unit to the other.

It is generally preferable if the rail vehicle has a first communication bus 151 configured to feed the brake input signal B to each of the at least two railroad cars 111, 112 and 11n, for example from a locomotive in the rail vehicle (not shown). Preferably, according to the invention, the locomotive is regarded to be a front-most railroad car in the rail vehicle, which may or may not be configured to also carry passengers and/or goods. The first communication bus 151 may be of electronic or optic format.

Alternatively, instead of using a bus format, data and control signals may be exchanged between the railroad cars 111, 112 and 11n on an analog format, for example employing pulse width modulation.

In response to the brake input signal B, each of the control units 121-1, 121-2, 122-1, 122-2, 12n-1 and 12n-2 is configured to generate at least one control signal c₁₁, c₁₂, c₁₃, c₁₄, c₂₁, c₂₂, c₂₃, c₂₄, cₙ₁, cₙ₂, cₙ₃ and cₙ₄ respectively, which control signal designates a desired brake force to be applied. For example, an operator may produce a service brake command designating 40 % of a full braking capacity. In case of emergency braking, the brake input signal B is equivalent to 100 % of the full braking capacity.

Each brake actuator 131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ and 13n_{2b} respectively is configured to receive a control signal generated by one of the control units located in the same railroad car as the brake actuator itself. For example, a control unit 121-1 may feed control signals c₁₁ and c₁₂ to the brake actuators 131₁ₐ and 131_{1b}, which, in turn, feed resulting brake-force signals f₁₁ and f₁₂ to the brake units 141-1 and 141-2 respectively, each of which brake unit 141-1 and 141-2 is responsible for braking a separate wheel pair in a particular bogie, say the front bogie of the first railroad car 111. Analogously, each remaining control unit 122-1, 122-2, 12n-1 and 12n-2 may be configured to control the braking of a respective bogie in the railroad cars 111, 112 and 11n of the rail vehicle.

Based on the respective control signals c₁₁, c₁₂, c₁₃, c₁₄, c₂₁, c₂₂, c₂₃, c₂₄, cₙ₁, cₙ₂, cₙ₃ and cₙ₄, each brake actuator 131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ and 13n_{2b} is configured to produce a brake-force signal f₁₁, f₁₂, f₁₃, f₁₄, f₂₁, f₂₂, f₂₃, f₂₄, fₙ₁, fₙ₂, fₙ₃ and fₙ₄ respectively, which is fed to a particular brake unit 141-1, 141-2, 141-3, 141-4, 142-1, 142-2, 142-3, 142-4, 14n-1, 14n-2, 14n-3 and 14n-4. Each of the brake units has a pressing member and a rotatable member that is mechanically linked to at least one wheel of a railroad car 111, 112, or 11n.

The brake units are configured to receive the brake-force signals f₁₁, f₁₂, f₁₃, f₁₄, f₂₁, f₂₂, f₂₃, f₂₄, fₙ₁, fₙ₂, fₙ₃ and fₙ₄ produced by the brake actuators 131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ and 13n_{2b} respectively. Specifically, a given brake unit receives a brake-force signal produced by a brake actuator located in the same railroad car as the brake unit itself, for example as described above and illustrated in Figure 1. In response to the brake-force signal, f₁₁, f₁₂, f₁₃, f₁₄, f₂₁, f₂₂, f₂₃, f₂₄, fₙ₁, fₙ₂, fₙ₃ and fₙ₄, the brake units 141-1, 141-2, 141-3, 141-4, 142-1, 142-2, 142-3, 142-4, 14n-1, 14n-2, 14n-3 and 14n-4 respectively cause the pressing member to apply a braking force to the rotatable member so as to reduce a rotation speed of the at least one wheel to which the rotatable member is mechanically linked.

According to the invention, not only the brake input signal B serves a basis for the control signal c₁₁, c₁₂, c₁₃, c₁₄, c₂₁, c₂₂, c₂₃, c₂₄, cₙ₁, cₙ₂, cₙ₃ and cₙ₄. Namely, each of the control units 121-1, 121-2, 122-1, 122-2, 12n-1 and 12n-2 is configured to generate the respective control signal c₁₁, c₁₂, c₁₃, c₁₄, c₂₁, c₂₂, c₂₃, c₂₄, cₙ₁, cₙ₂, cₙ₃ and cₙ₄ on the further basis of at least one motion parameter expressing a respective movement m₁, m₂ and mₙ of the railroad cars 111, 112 and 11n.

As is well known in the art, there exists various forms of a articulated railroad cars, for example in commuter trains and tramway vehicles. In rail vehicles with this type of railroad cars, so-called Jacobs bogies are commonly used. Jacobs bogies are arranged between two carriages, or segments of an articulated railroad car. Thereby, the weight of the adjoining carriages/segments is spread across the Jacobs bogie. This design provides a smooth ride of bogie carriages without requiring any additional weight and drag. In the present invention, the segments of an articulated railroad car being connected over a Jacobs bogie are considered to form part of one and the same railroad car. Consequently, these segments will be assigned an identical movement m₁, m₂ or mₙ according to the above.

According to one embodiment of the invention, it is presumed that the brake actuators are electrically controlled. Therefore, each of the railroad cars 111, 112 and 11n contains at least one battery unit 161, 162 and 16n respectively. The battery units 161, 162 and 16n are configured to provide electric energy to the control units 121-1, 121-2, 122-1, 122-2, 12n-1 and 12n-2 and the brake actuators 131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ and 13n_{2b} located in the same railroad car as the at least one battery unit 161, 162 and 16n itself is located. The battery unit 161, 162 or 16n may be comprised in, or be co-located with each, a particular one of the control units 121-1, 121-2, 122-1, 122-2, 12n-1 and 12n-2.

In any case, two or more control units, e.g. 121-1 and 121-2, in a particular railroad car 111 may share a common battery unit 161. Similarly, two or more brake actuators, e.g. 131₁ₐ, 131_{1b}, 131₂ₐ, and 131_{2b}, in a particular railroad car 111 may share a common battery unit 161. If the battery unit 161 constitutes such a shared resource, it is preferably not integrated into one of the control units. However, from a technical point-of view, this is not excluded either. In any case, the battery units provide an important back-up source of energy for effecting the braking functionality in case a main electric supply to the braking system is broken.

According to one embodiment of the invention, at least one battery charger (not shown) is included in each of the railroad cars 111, 112 and 11n, which at least one battery charger is configured to charge the at least one battery unit 161, 162 and 16n during operation of the rail vehicle. Hence, reliable backup energy can always be provided to the braking system.

It is worth noticing that, in a braking system wherein the brakes are controlled pneumatically/hydraulically, accumulator tanks holding pressurized gas/fluid may serve as battery equivalents to provide backup sources of energy enabling brake functionality in case of a malfunctioning brake control system.

Figure 2a shows an accelerometer 211 for registering the movements m₁, m₂ and mₙ of the railroad cars 111, 112 and 11n respectively according to one embodiment of the invention.

An accelerometer as exemplified by 211 is comprised in each of the railroad cars 111, 112 and 11n, and each accelerometer is configured to produce at least one vector signal representing an acceleration in at least one dimension of the railroad car in which the at least one accelerometer 211 is comprised. For example, the at least one accelerometer 211 may produce vector signals expressing respective accelerations in the three spatial directions a_{X}, a_{Y} and a_{Z} and/or rotational accelerations yaw a_{R}, pitch a_{P} and roll aw of the railroad car. In any case, the at least one vector signal expresses the respective movement m₁, m₂ and mₙ of the railroad cars 111, 112 and 11n respectively.

Further, each of the control units 121-1, 121-2, 122-1, 122-2, 12n-1 and 12n-2 is configured to receive each of the at least one vector signal from each accelerometer in each railroad car 111, 112 and 11n in the rail vehicle, and based thereon generate the control signals c₁₁, c₁₂, c₁₃, c₁₄, c₂₁, c₂₂, c₂₃, c₂₄, cₙ₁, cₙ₂, cₙ₃ and cₙ₄ respectively.

Figure 2b shows a rotational speed sensor 212 for registering the movements m₁, m₂ and mₙ of the railroad cars 111, 112 and 11n respectively according to another embodiment of the invention.

Here, each of the railroad cars 111, 112 and 11n contains at least one rotational speed sensor exemplified by 212, which at least one rotational speed sensor 212 is configured to produce at least one speed signal s_{ω} representing a respective speed ω of a wheel 221 of the railroad car in which the at least one rotational speed sensor 212 is comprised. Thus, the rotational speed sensor 212 may have sensor elements arranged on one or more wheels and/ or on one or more axles of a railroad car. In any case, the at least one speed signal s_{ω} expresses the movement m₁, m₂ and mₙ respectively of the railroad car.

Analogous to the above, each of the control units 121-1, 121-2, 122-1, 122-2, 12n-1, 12n-2 is configured to receive the at least one speed signal s_{ω} from each railroad car 111, 112 and 11n in the rail vehicle, and based thereon generate the control signal c₁₁, c₁₂, c₁₃, c₁₄, c₂₁, c₂₂, c₂₃, c₂₄, cₙ₁, cₙ₂, cₙ₃ and cₙ₄ respectively.

According to one embodiment of the invention, each control unit, for example 121-1 in the railroad car 111, is configured to receive at least one of the at least one motion parameter expressing the respective movement of each other railroad car 112 and 11n in the rail vehicle, i.e. m₂ and mₙ respectively.

The control unit 121-1 is further configured to determine an average motion parameter m_{avg} based on the at least one received motion parameter m₂ and mₙ, and an own motion parameter expressing the movement m₁ the railroad car in which the control unit 121-1 is comprised. Here, the motion parameters expressing the movements m₁, m₂ and mₙ may for example be represented by respective speed signals s_{ω} and/or respective accelerations a_{Y} lengthwise the railroad cars 111, 112 and 11n.

Moreover, the control unit 121-1 is configured to generate the respective control signal c₁₁ and c₁₂ such that it causes the brake actuators 131₁ₐ and 131_{1b} respectively controlled by the control unit 121-1 to produce brake-force signals f₁₁ and f₁₂ respectively causing the pressing members of the brake units 141-1 and 141-2 to apply braking forces being modified relative to what would be given by the brake input signal B alone. Specifically, the control unit 121-1 is configured to generate the respective control signal c₁₁ and c₁₂ such that it causes the brake actuators 131₁ₐ and 131_{1b} to produce a respective brake-force signal f₁₁ and f₁₂ to the brake units 141-1 and 141-2 resulting in an increased braking force, if the own motion parameter expresses that the movement m₁ of the railroad car 111 has a magnitude larger than what is expressed by the average motion parameter m_{avg}. In other words, if the own railroad car 111 runs somewhat faster than a current average magnitude of motion of the railroad cars in the rail vehicle, the brakes in the own railroad car 111 will brake a bit harder.

Similarly, according to one embodiment of the invention, each control unit 121-1 is configured to generate the control signal c₁₁ and c₁₂ such that it causes the brake actuators 131₁ₐ and 131_{1b} respectively controlled by the control unit 121-1 to produce the respective brake-force signals f₁₁ and f₁₂ to the brake units 141-1 and 141-2 causing the at least one pressing member to apply a decreased braking force, if the own motion parameter expresses that the movement m₁ of the railroad car 111 has a magnitude smaller than what is expressed by the average motion parameter m_{avg}. In other words, if the own railroad car 111 runs somewhat slower than a current average magnitude of motion of the railroad cars in the rail vehicle, the brakes in the own railroad car 111 will brake a bit less hard. This results in a relatively jerk free braking process.

Exactly how much harder or less hard the brake shall be controlled if the own railroad car 111 is found to run faster or slower respectively than the current average magnitude of motion of the railroad cars in the rail vehicle is a design parameter, which inter alia depends on how often the motion parameters expressing the movements m₁, m₂ and mₙ are updated.

According to one embodiment of the invention, each control unit 121-1 is configured to generate the control signal c₁₁ and c₁₂ such that it causes the brake actuators 131₁ₐ and 131_{1b} respectively controlled by the control unit 121-1 to produce the respective brake-force signals f₁₁ and f₁₂ to the brake units 141-1 and 141-2 causing the at least one pressing member to apply a maintained braking force, if the own motion parameter expresses that the movement m₁ of the railroad car 111 has a magnitude equal to what is expressed by the average motion parameter m_{avg}. In other words, if the own railroad car 111 has a magnitude of motion coinciding with a current average magnitude of motion of the railroad cars in the rail vehicle, the brakes in the own railroad car 111 will continue to brake as they do in order to attain an overall smooth braking process.

According to one embodiment of the invention, the rail vehicle includes a second communication bus 152, which is configured to exchange the motion parameters expressing the respective movements m₁, m₂ and mₙ of the railroad cars 111, 112 and 11n respectively. The second communication bus 152 may be of electronic or optic format, and the second communication bus 152 may either be physically and/or logically separate from the first communication bus 151, or the second communication bus 152 may form a physically integrated part of the first communication bus 151, and/or the second communication bus 152 may form a logically integrated part of first communication bus 151. In any case, a communication bus is generally preferred for exchanging the motion parameters because the bus format provides an efficient means of exchanging data between the different railroad cars 111, 112 and 11n.

Referring again to Figure 2b, according to one embodiment of the invention, a measurement module 214 is arranged at each wheel 221 whose rotation speed ω one of the brake actuators 131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ and 13n_{2b} is configured to cause to reduce, which measurement module 214 is configured to produce a slip signal s₁₁ reflecting a degree of slip of the wheel 221. Further, each brake actuator, for instance 131₁ₐ, is configured to receive the slip signal s₁₁, and if the degree of slip exceeds a threshold value, the brake actuator 131₁ₐ is configured to produce the brake-force signal f₁₁ such that the brake unit 141-1 causes the pressing member to apply a braking force to the rotatable member, which braking force is lower than a braking force designated by the received control signal c₁₁ alone. This results in a comparatively short braking distance while the braking process is kept relatively jerk free.

Exactly how much the braking force shall be lowered is a design parameter, which inter alia depends on the threshold value for the degree of slip and how often the slip signal s₁₁ is updated.

It is further advantageous if two or more of the brake actuators 131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ and 13n_{2b} exchange slip-related information between one another. Namely, this enables a second brake unit, e.g. 141-2, to take over a part of the braking responsibility from a first brake unit, e.g. 141-1, if the degree of slip exceeds the threshold value in the first brake unit, however not the second brake unit.

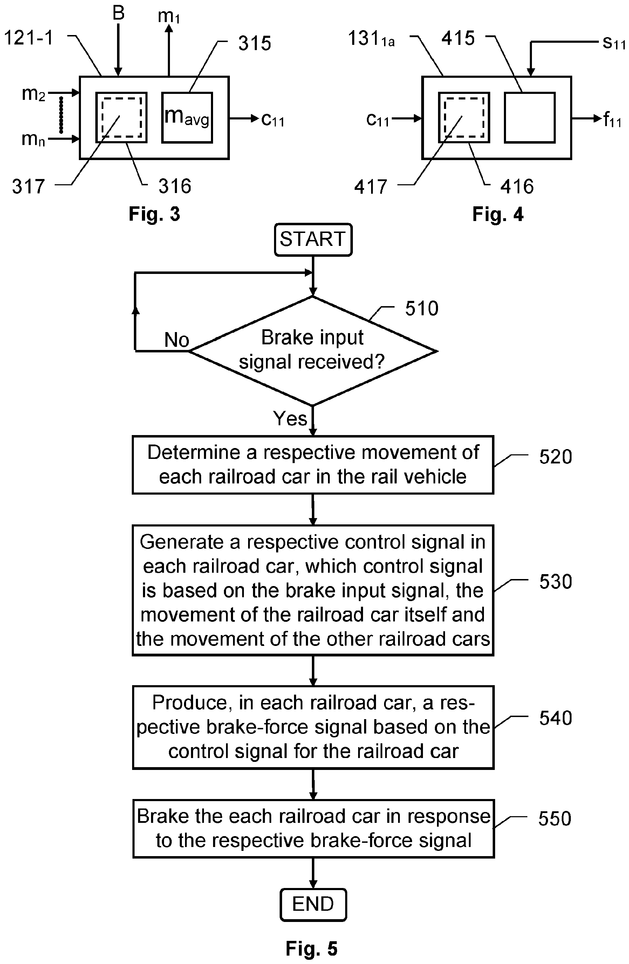

It is generally advantageous if the above-described braking procedure is effected in an automatic manner by executing one or more computer programs. Therefore, each control unit and brake actuator respectively preferably includes processing circuitry and programmed memory units, the designs of which will be briefly described below with reference to Figures 3 and 4.

Figure 3 shows a block diagram of a control unit 121-1 according to one embodiment of the invention. The control unit 121-1 includes processing circuitry in the form of at least one processor 315 and a memory unit 316, i.e. non-volatile data carrier, storing a computer program 317, which, in turn, contains software for making the at least one processor 315 execute the actions mentioned in this disclosure when the computer program 317 is run on the at least one processor 315.

As explained above, the control unit 121-1 is configured to receive the brake input signal B and the motion parameters expressing the respective movements m₂ and mₙ of the other railroad cars 112 and 11n in the rail vehicle; and output at least one control signal, here exemplified by c₁₁.

Figure 4 shows a block diagram of a brake actuator 131₁ₐ according to one embodiment of the invention. The brake actuator 131₁ₐ includes processing circuitry in the form of at least one processor 415 and a memory unit 416, i.e. non-volatile data carrier, storing a computer program 417, which, in turn, contains software for making the at least one processor 415 execute the actions mentioned in this disclosure when the computer program 417 is run on the at least one processor 415.

As explained above, the brake actuator 131₁ₐ is configured to receive the control signal c₁₁, and preferably the slip signal s₁₁; and output the brake-force signal f₁₁.

Naturally, although the control unit 121-1 and the brake actuator 131₁ₐ have been described as separate entities above, these entities may equally well be partially or fully co-located with/integrated into one another. In particular, according to the invention, at least one control unit and at least one brake actuator, two or more control units and/or two or more brake actuators may share common processing resources.

In order to sum up, and with reference to the flow diagram in Figure 5, we will now describe the computer-implemented method according to the invention of decelerating a rail vehicle, which contains at least two railroad cars, where each railroad car includes at least one control unit, at least one brake actuator and at least one brake unit.

A first step 510, checks if a brake input signal has been received. If so, a step 520 follows; and otherwise, the procedure loops back and stays in step 510.

In step 520, a respective movement of each railroad car is determined, for example via acceleration measurements and/or wheel speed measurements. Thereafter, a step 530 follows that generates, in each of the control units, a respective control signal. Here, each control signal is generated in response to the brake input signal. The control signal is based on the movement of the railroad car itself and the movement of the other railroad cars. As discussed above, a relationship between the movement of the railroad car itself and the average movement of all the railroad cars in the rail vehicle may influence an applied brake force up or down relative to what is stipulated by the received brake input signal.

The control signals generated in step 530 are fed to respective brake actuators. Specifically, each control unit feeds its control signal to one or more brake actuators located in the same railroad car as the control unit itself.

In a step 540 subsequent to step 530, each brake actuator produces a respective brake-force signal based on the control signal received from the control unit. Each brake-force signal is fed to one or more brake units located in the same railroad car as the brake actuator itself.

Then, in a step 550, each brake unit causes a pressing member to apply a braking force to a rotatable member mechanically linked to at least one wheel of a railroad car so as to reduce a rotation speed of the at least one wheel in response to the brake-force signal.

Thereafter the procedure ends. Of course, in practice, step 510 may be reactivated, for example to check if a renewed brake input signal has been received.

All of the process steps, as well as any sub-sequence of steps, described with reference to Figure 5 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage.

Any reference signs in the claims should not be construed as limiting the scope.

The invention is not restricted to the described embodiments in the figures, but may be varied freely within the scope of the appended claims.

## Claims

1. A braking system for a rail vehicle comprising at least two railroad cars (111, 112, 11n), the braking system comprising:
a number of control units (121-1, 121-2, 122-1, 122-2, 12n-1, 12n-2) at least one of which is arranged in each one of the at least two railroad cars (111, 112, 11n), each of said at least two control units being configured to receive a brake input signal (B), and in response thereto generate a control signal (c₁₁, c₁₂, c₁₃, c₁₄, c₂₁, c₂₂, c₂₃, c₂₄, cₙ₁, cₙ₂, cₙ₃, cₙ₄);
a number of brake actuators (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}) arranged in each of the at least two railroad cars, each of which brake actuator is configured to receive the control signal (c₁₁, c₁₂, c₁₃, c₁₄, c₂₁, c₂₂, c₂₃, c₂₄, cₙ₁, cₙ₂, cₙ₃, cₙ₄) generated by one of the at least one control unit comprised in the same railroad car as the brake actuator, and based on the control signal, produce a brake-force signal (f₁₁, f₁₂, f₁₃, f₁₄, f₂₁, f₂₂, f₂₃, f₂₄, fₙ₁, fₙ₂, fₙ₃, fₙ₄); and
a number of brake units (141-1, 141-2, 141-3, 141-4, 142-1, 142-2, 142-3, 142-4, 14n-1, 14n-2, 14n-3, 14n-4) each comprising a pressing member and a rotatable member being mechanically linked to at least one wheel of one of the at least two railroad cars (111, 112, 11n), each of which brake unit is configured to receive the brake-force signal (f₁₁, f₁₂, f₁₃, f₁₄, f₂₁, f₂₂, f₂₃, f₂₄, fm, fₙ₂, fₙ₃, fₙ₄) produced by the brake actuator comprised in the same railroad car as the brake unit, and in response to the brake-force signal, cause the pressing member to apply a braking force to the rotatable member so as to reduce a rotation speed of the at least one wheel, **characterized in that** the at least one control unit (121-1, 121-2, 122-1, 122-2, 12n-1, 12n-2) is configured to generate the control signal (c₁₁, c₁₂, c₁₃, c₁₄, c₂₁, c₂₂, c₂₃, c₂₄, cₙ₁, cₙ₂, cₙ₃, cₙ₄) on the further basis of at least one motion parameter (a_{X}, a_{Y}, a_{Z}, a_{R}, a_{P}, a_{W}; ω) expressing a respective movement (m₁, m₂, mₙ) of each of the at least two railroad cars (111, 112, 11n).

2. The braking system according to claim 1, wherein the rail vehicle comprises a first communication bus (151) configured to feed the brake input signal (B) to each of the at least two railroad cars (111, 112, 11n).

3. The braking system according to any one of claims 1 or 2, wherein:
each of the least two railroad cars (111, 112, 11n) comprises at least one accelerometer (211) configured to produce at least one vector signal representing an acceleration (a_{X}, a_{Y}, a_{Z}, a_{R}, a_{P}, aw) in at least one dimension of the railroad car in which the at least one accelerometer (211) is comprised, which at least one vector signal expresses the respective movement (m₁, m₂, mₙ) of said railroad car, and
the at least one control unit (121-1, 121-2, 122-1, 122-2, 12n-1, 12n-2) is configured to receive the at least one vector signal, and based thereon generate the control signal (c₁₁, c₁₂, c₁₃, c₁₄, c₂₁, c₂₂, c₂₃, c₂₄, cₙ₁, cₙ₂, cₙ₃, cₙ₄).

4. The braking system according to any one of the preceding claims, wherein:
each of the least two railroad cars (111, 112, 11n) comprises at least one rotational speed sensor (212) configured to produce at least one speed signal (s_{ω}) representing a respective speed (ω) of a wheel (221) of the railroad car in which the at least one rotational speed sensor (212) is comprised, which at least one speed signal (s_{ω}) expresses the movement (m₁, m₂, mₙ) of said railroad car, and
the at least one control unit (121-1, 121-2, 122-1, 122-2, 12n-1, 12n-2) in said railroad car is configured to receive the at least one speed signal (s_{ω}), and based thereon generate the control signal (c₁₁, c₁₂, c₁₃, c₁₄, c₂₁, c₂₂, c₂₃, c₂₄, cₙ₁, cₙ₂, cₙ₃, cₙ₄).

5. The braking system according to any one of the preceding claims, wherein each of said control units (121-1, 121-2, 122-1, 122-2, 12n-1, 12n-2) is configured to:
receive at least one of the at least one motion parameter expressing the respective movement (m₂, mₙ) of each other railroad car comprised in the rail vehicle;
determine an average motion parameter (m_{avg}) based on the at least one received motion parameter and an own motion parameter expressing the movement (m₁) the railroad car in which said respective one control unit (121-1) is comprised; and
generate the control signal (c₁₁, c₁₂) such that it causes the brake actuator (131₁ₐ, 131_{1b}) controlled by said respective one control unit (121-1) to produce a respective brake-force signal (f₁₁, f₁₂) to the at least one brake unit (141-1; 141-2) causing the at least one pressing member to apply an increased braking force, if the own motion parameter expresses that the movement (m₁) of the railroad car (111) has a magnitude larger than what is expressed by the average motion parameter (m_{avg}).

6. The braking system according to claim 5, wherein each of said control units (121-1, 121-2, 122-1, 122-2, 12n-1, 12n-2) is configured to generate the control signal (c₁₁, c₁₂) such that it causes the brake actuator (131₁ₐ, 131_{1b}) controlled by said respective one control unit (121-1) to produce a respective brake-force signal (f₁₁, f₁₂) to the at least one brake unit (141-1; 141-2) causing the at least one pressing member to apply a decreased braking force, if the own motion parameter expresses that the movement (m₁) of the railroad car (111) has a magnitude smaller than what is expressed by the average motion parameter (m_{avg}).

7. The braking system according to any one of the claims 5 or 6, wherein each of said control units (121-1, 121-2, 122-1, 122-2, 12n-1, 12n-2) is configured to generate the control signal (c₁₁, c₁₂) such that it causes the brake actuator (131₁ₐ, 131_{1b}) controlled by said respective one control unit (121-1) to produce a brake-force signal (f₁₁, f₁₂) to the at least one brake unit (141-1; 141-2) causing the at least one pressing member to apply a maintained braking force, if the own motion parameter expresses that the movement (m₁) the railroad car (111) has a magnitude equal to what is expressed by the average motion parameter (m_{avg}).

8. The braking system according to any one of the claims 3 to 7, wherein the rail vehicle comprises a second communication bus (152) configured to exchange the motion parameters expressing the respective movements (m₁, m₂, mₙ) of the railroad cars (111, 112, 11n) comprised in the rail vehicle between said railroad cars (111, 112, 11n).

9. The braking system according to any one of the preceding claims, wherein each of the at least two railroad cars (111, 112, 11n) comprised in the rail vehicle comprises at least one respective battery unit (161, 162, 16n) configured to provide electric energy to the control units (121-1, 121-2, 122-1, 122-2, 12n-1, 12n-2) and the brake actuators (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}) comprised in the same railroad car as the least one respective battery unit.

10. The braking system according to claim 9, wherein each of the at least two railroad cars (111, 112, 11n) comprised in the rail vehicle comprises at least one battery charger configured to charge the at least one respective battery unit (161, 162, 16n) during operation of the rail vehicle.

11. The braking system according to any one of the preceding claims, wherein the brake input signal (B) has been generated in response to at least one of a service brake command, an emergency brake command and a parking brake command.

12. The braking system according to any one of the preceding claims, wherein:
each of the at least one wheel (221) whose rotation speed (ω) one of said brake actuators (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}) is configured to cause to reduce is a wheel (221) whose rotation is monitored by a measurement module (214) configured to produce a slip signal (s₁₁) reflecting a degree of slip of the at least one wheel (221), and
each of said brake actuators (131₁ₐ) is configured to receive the slip signal (s₁₁), and if the degree of slip exceeds a threshold value, the brake actuator (131₁ₐ) is configured to produce the brake-force signal (f₁₁) such that the brake unit (141-1) causes the pressing member to apply a braking force to the rotatable member, which braking force is lower than a braking force designated by the received control signal (c₁₁).

13. A computer-implemented method of decelerating a rail vehicle comprising at least two railroad cars (111, 112, 11n) each of which comprises: at least one control unit (121-1, 121-2, 122-1, 122-2, 12n-1, 12n-2), at least one brake actuator (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}), and at least one brake unit (141-1, 141-2, 141-3, 141-4, 142-1, 142-2, 142-3, 142-4, 14n-1, 14n-2, 14n-3, 14n-4), the method comprising:
receiving a brake input signal (B) in each of said control units (121-1, 121-2, 122-1, 122-2, 12n-1, 12n-2),
generating, in each of said control units, a respective control signal (C11, C12, C13, C14, C21, C22, C23, C24, Cn1, Cn2, Cn3, Cn4) in response to the brake input signal (B);
receiving each of the respective control signals (c₁₁, c₁₂, c₁₃, c₁₄, c₂₁, c₂₂, c₂₃, c₂₄, cₙ₁, cₙ₂, cₙ₃, cₙ₄) in one of the brake actuators (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}) comprised in the same railroad car as the control unit which produced the control signal,
producing, in each of the brake actuators, a respective brake-force signal (f₁₁, f₁₂, f₁₃, f₁₄, f₂₁, f₂₂, f₂₃, f₂₄, fₙ₁, fₙ₂, fₙ₃, fₙ₄) based on the control signal (c₁₁, c₁₂, c₁₃, c₁₄, c₂₁, c₂₂, c₂₃, c₂₄, cₙ₁, cₙ₂, cₙ₃, cₙ₄);
receiving each of the respective brake-force signals (f₁₁, f₁₂, f₁₃, f₁₄, f₂₁, f₂₂, f₂₃, f₂₄, fₙ₁, fₙ₂, fₙ₃, fₙ₄) in one of the brake units (141-1, 141-2, 141-3, 141-4, 142-1, 142-2, 142-3, 142-4, 14n-1, 14n-2, 14n-3, 14n-4) comprised in the same railroad car as the brake actuator which produced the brake-force signal, each brake unit comprising a pressing member and a rotatable member being mechanically linked to at least one wheel of the at least two railroad cars (111, 112, 11n), and
causing, in each brake unit, the pressing member to apply a braking force to the rotatable member so as to reduce a rotation speed of the at least one wheel of the at least one railroad car (111, 112, 11n) in response to the brake-force signal, **characterized by**
generating, in each of the control units, the respective control signal (c₁₁, c₁₂, c₁₃, c₁₄, c₂₁, c₂₂, c₂₃, c₂₄, cₙ₁, cₙ₂, cₙ₃, cₙ₄) on the further basis of at least one motion parameter (a_{X}, a_{Y}, a_{Z}, a_{R}, a_{P}, a_{W}; ω) expressing a respective movement (m₁, m₂, mₙ) of each of the at least two railroad cars (111, 112, 11n).

14. The method according to claim 13, comprising:
feeding the brake input signal (B) to each of the at least two railroad cars (111, 112, 11n) via a first communication bus (151) comprised in the rail vehicle.

15. The method according to any one of claims 13 or 14, comprising:
producing, in each of the least two railroad cars (111, 112, 11n), at least one vector signal representing an acceleration (ax, a_{Y}, a_{Z}, a_{R}, a_{P}, a_{W}) of the railroad car in at least one dimension, the at least one vector signal being produced by means of at least one accelerometer (211) and the at least one vector signal expressing the respective movement (m₁, m₂, mₙ) of the railroad car; and
generating the control signal (c₁₁, c₁₂, c₁₃, c₁₄, c₂₁, c₂₂, c₂₃, c₂₄, cₙ₁, cₙ₂, cₙ₃, cₙ₄) based on the at least one vector signal.

16. The method according to any one of the claims 13 to 15, comprising:
producing, in each of the least two railroad cars (111, 112, 11n), at least one speed signal (s_{ω}) representing a respective speed (ω) of a wheel (221) of the railroad car, the at least one speed signal (s_{ω}) being produced by at least one a rotational speed sensor (212) and the at least one speed signal (s_{ω}) expressing the movement (m₁, m₂, mₙ) of the railroad car, and
generating the control signal (c₁₁, c₁₂, c₁₃, c₁₄, c₂₁, c₂₂, c₂₃, c₂₄, cₙ₁, cₙ₂, cₙ₃, cₙ₄) based on the at least one speed signal (s_{ω}).

17. The method according to any one of the claims 13 to 16, further comprising:
receiving, in each of the control units (121-1, 121-2, 122-1, 122-2, 12n-1, 12n-2), at least one of the at least one motion parameter expressing the respective movement (m₂, mₙ) of each other railroad car comprised in the rail vehicle;
determining, in each of the control units (121-1, 121-2, 122-1, 122-2, 12n-1, 12n-2), an average motion parameter (m_{avg}) based on the at least one received motion parameter and an own motion parameter expressing the movement (m₁) the railroad car in which said respective one control unit (121-1) is comprised; and
generating, in each of the control units (121-1, 121-2, 122-1, 122-2, 12n-1, 12n-2), the control signal (c₁₁, c₁₂) such that it causes the brake actuator (131₁ₐ, 131_{1b}) controlled by the control unit (121-1) to produce a respective brake-force signal (f₁₁, f₁₂) to the at least one brake unit (141-1; 141-2) causing the at least one pressing member to apply an increased braking force, if the own motion parameter expresses that the movement (m₁) of the railroad car (111) has a magnitude larger than the average motion parameter (m_{avg}).

18. The method according to claim 17, further comprising:
generating, in each of the control units (121-1, 121-2, 122-1, 122-2, 12n-1, 12n-2), the control signal (c₁₁, c₁₂) such that it causes the brake actuator (131₁ₐ, 131_{1b}) controlled by the control unit (121-1) to produce a respective brake-force signal (f₁₁, f₁₂) to the at least one brake unit (141-1; 141-2) causing the at least one pressing member to apply an increased braking force, if the own motion parameter expresses that the movement (m₁) of the railroad car (111) has a magnitude larger than the average motion parameter (m_{avg}) a decreased braking force, if the own motion parameter expresses that the movement (m₁) of the railroad car (111) has a magnitude smaller than the average motion parameter (m_{avg}).

19. The method according to any one of the claims 17 to 18, further comprising:
generating, in each of the control units (121-1, 121-2, 122-1, 122-2, 12n-1, 12n-2), the control signal (c₁₁, c₁₂) such that it causes the brake actuator (131₁ₐ, 131_{1b}) controlled by the control unit (121-1) to produce a respective brake-force signal (f₁₁, f₁₂) to the at least one brake unit (141-1; 141-2) causing the at least one pressing member to apply an increased braking force, if the own motion parameter expresses that the movement (m₁) of the railroad car (111) has a magnitude larger than the average motion parameter (m_{avg}) a maintained braking force, if the own motion parameter expresses that the movement (m₁) the railroad car (111) has a magnitude equal to the average motion parameter (m_{avg}).

20. The method according to any one of the claims 15 to 19, comprising exchanging the motion parameters expressing the respective movements (m₁, m₂, mₙ) of the railroad cars (111, 112, 11n) comprised in the rail vehicle between the railroad cars (111, 112, 11n) via a second communication bus (152) comprised in the rail vehicle.

21. The method according to any one of the claims 13 to 20, comprising generating the brake input signal (B) in response to at least one of a service brake command, an emergency brake command and a parking brake command.

22. The method according to any one of the claims 13 to 21, comprising:
producing a slip signal (s₁₁) reflecting a degree of slip of each of the at least one wheel (221) whose rotation speed (ω) one of said brake actuators (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}) is configured to cause to reduce, the slip signal (s₁₁) being produced by a measurement module (214) configured to monitor a rotation of the at least one wheel (221); and if the degree of slip thereof exceeds a threshold value
producing, in the brake actuator (131₁ₐ), the brake-force signal (f₁₁) such that the brake unit (141-1) causes the pressing member to apply a braking force to the rotatable member, which braking force is lower than a braking force designated by the received control signal (c₁₁).

23. A computer program (317; 417) loadable into a non-volatile data carrier (316; 416) communicatively connected to at least one processor (315; 415), the computer program (317; 417) comprising software for executing the method steps to be performed by the at least one control unit (121-1, 121-2, 122-1, 122-2, 12n-1, 12n-2) according any of the claims 13 to 22 when the computer program (317; 417) is run on the at least one processor (315; 415).

24. A non-volatile data carrier (316; 416) containing the computer program (317; 417) of the claim 23.

## Patentansprüche

1. Bremssystem für ein Schienenfahrzeug, das wenigstens zwei Schienenwagen (111, 112, 11n) aufweist, wobei das Bremssystem aufweist:
eine Anzahl von Steuereinheiten (121-1, 121-2, 122-1, 122-2, 12n-1, 12n-2), von denen wenigstens eine in jedem der wenigstens zwei Schienenwagen (111, 112, 11n) eingerichtet ist, wobei jede der wenigstens zwei Steuereinheiten konfiguriert ist, um ein Eingangs-Bremssignal (B) zu empfangen und ansprechend darauf ein Steuersignal (c₁₁, c₁₂, c₁₃, c₁₄, c₂₁, c₂₂, c₂₃, c₂₄, cₙ₁, cₙ₂, cₙ₃, cₙ₄) zu erzeugen,
eine Anzahl von Bremsaktuatoren (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}), die in jedem der wenigstens zwei Schienenwagen eingerichtet sind, wobei jeder Bremsaktuator konfiguriert ist, um das Steuersignal (c₁₁, c₁₂, c₁₃, c₁₄, c₂₁, c₂₂, c₂₃, c₂₄, cₙ₁, cₙ₂, cₙ₃, cₙ₄) zu empfangen, das von einer der wenigstens einen Steuereinheit erzeugt wird, die in dem gleichen Schienenwagen wie der Bremsaktuator enthalten ist, und basierend auf dem Steuersignal ein Bremskraftsignal (f₁₁, f₁₂, f₁₃, f₁₄, f₂₁, f₂₂, f₂₃, f₂₄, fₙ₁, fₙ₂, fₙ₃, fₙ₄) zu erzeugen, und
eine Anzahl von Bremseinheiten (141-1, 141-2, 141-3, 141-4, 142-1, 142-2, 142-3, 142-4, 14n-1, 14n-2, 14n-3, 14n-4), von denen jede ein Druckelement und ein drehbares Element aufweist, die mit wenigstens einem Rad der wenigstens zwei Schienenwagen (111, 112, 11n) mechanisch verbunden sind, wobei jede der Bremseinheiten konfiguriert ist, um das Bremskraftsignal (f₁₁, f₁₂, f₁₃, f₁₄, f₂₁, f₂₂, f₂₃, f₂₄, fₙ₁, fₙ₂, fₙ₃, fₙ₄) zu empfangen, das von dem Bremsaktuator erzeugt wird, der in dem gleichen Schienenwagen wie die Bremseinheit enthalten ist, und ansprechend auf das Bremskraftsignal zu bewirken, dass das Druckelement eine Bremskraft auf das drehbare Element anwendet, um eine Drehzahl des wenigstens einen Rads zu verringern, **dadurch gekennzeichnet, dass** die wenigstens eine Steuereinheit (121-1, 121-2, 122-1, 122-2, 12n-1, 12n-2) konfiguriert ist, um das Steuersignal (c₁₁, c₁₂, c₁₃, c₁₄, c₂₁, c₂₂, c₂₃, c₂₄, cₙ₁, cₙ₂, cₙ₃, cₙ₄) auf der weiteren Basis wenigstens eines Bewegungsparameters (aₓ, a_{y}, a_{z}, a_{R}, a_{P}, a_{W}; ω), der eine jeweilige Bewegung (m₁, m₂, mₙ) jedes der wenigstens zwei Schienenwagen (111, 112, 11n) ausdrückt, zu erzeugen.

2. Bremssystem nach Anspruch 1, wobei das Schienenfahrzeug einen ersten Kommunikationsbus (151) aufweist, der konfiguriert ist, um das Eingangs-Bremssignal (B) in jeden der wenigstens zwei Schienenwagen (111, 112, 11n) zu speisen.

3. Bremssystem nach einem der Ansprüche 1 oder 2, wobei:
jeder der wenigstens zwei Schienenwagen (111, 112, 11n) wenigstens einen Beschleunigungsmesser (211) aufweist, der konfiguriert ist, um wenigstens ein Vektorsignal zu erzeugen, das eine Beschleunigung (a_{X}, a_{y}, a_{z}, a_{R}, a_{P}, a_{W}) in wenigstens einer Dimension des Schienenfahrzeugs, in dem der wenigstens eine Beschleunigungsmesser (211) enthalten ist, darstellt, wobei das wenigstens eine Vektorsignal die jeweilige Bewegung (m₁, m₂, mₙ) des Schienenwagens darstellt, und
die wenigstens eine Steuereinheit (121-1, 121-2, 122-1, 122-2, 12n-1, 12n-2) konfiguriert ist, um das wenigstens eine Vektorsignal zu empfangen und basierend darauf das Steuersignal (c₁₁, c₁₂, c₁₃, c₁₄, c₂₁, c₂₂, c₂₃, c₂₄, cₙ₁, cₙ₂, cₙ₃, cₙ₄) zu erzeugen.

4. Bremssystem nach einem der vorhergehenden Ansprüche, wobei:
jeder der wenigstens zwei Schienenwagen (111, 112, 11n) wenigstens einen Drehzahlsensor (212) aufweist, der konfiguriert ist, um wenigstens ein Drehzahlsignal (s_{ω}) zu erzeugen, das eine jeweilige Drehzahl (ω) eines Rads (221) des Schienenwagens darstellt, in dem der wenigstens eine Drehzahlsensor (212) enthalten ist, wobei das wenigstens eine Drehzahlsignal (s_{ω}) die Bewegung (m₁, m₂, mₙ) des Schienenwagens darstellt, und
die wenigstens eine Steuereinheit (121-1, 121-2, 122-1, 122-2, 12n-1, 12n-2) in dem Schienenwagen konfiguriert ist, um das wenigstens eine Drehzahlsignal (s_{ω}) zu empfangen und basierend darauf das Steuersignal (c₁₁, c₁₂, c₁₃, c₁₄, c₂₁, c₂₂, c₂₃, c₂₄, cₙ₁, cₙ₂, cₙ₃, cₙ₄) zu erzeugen.

5. Bremssystem nach einem der vorhergehenden Ansprüche, wobei jede der Steuereinheiten (121-1, 121-2, 122-1, 122-2, 12n-1, 12n-2) konfiguriert ist, um:
wenigstens einen des wenigstens einen Bewegungsparameters, der die jeweilige Bewegung (m₂, mₙ) eines jeden anderen in dem Schienenfahrzeug enthaltenen Schienenwagens ausdrückt, zu empfangen,
einen durchschnittlichen Bewegungsparameter (m_{avg}) basierend auf dem wenigstens einen empfangenen Bewegungsparameter und einem eigenen Bewegungsparameter, der die Bewegung (m₁) des Schienenwagens, in dem die jeweilige eine Steuereinheit (121-1) enthalten ist, ausdrückt, zu bestimmen; und
das Steuersignal (c₁₁, c₁₂) derart zu erzeugen, dass es bewirkt, dass der Bremsaktuator (131₁ₐ, 131_{1b}), der von der jeweiligen einen Steuereinheit (121-1) gesteuert wird, ein jeweiliges Bremskraftsignal (f₁₁, f₁₂) an die wenigstens eine Bremseinheit (141-1; 141-2) erzeugt, das bewirkt, dass das wenigstens eine Druckelement eine erhöhte Bremskraft anwendet, wenn der eigene Bewegungsparameter ausdrückt, dass die Bewegung (m₁) des Schienenwagens (111) einen größeren Betrag hat als den, der durch den durchschnittlichen Bewegungsparameter (m_{avg}) ausgedrückt wird.

6. Bremssystem nach Anspruch 5, wobei jede der Steuereinheiten (121-1, 121-2, 122-1, 122-2, 12n-1, 12n-2) konfiguriert ist, um das Steuersignal (c₁₁, c₁₂) derart zu erzeugen, dass es bewirkt, dass der Bremsaktuator (131₁ₐ, 131_{1b}), der von der jeweiligen einen Steuereinheit (121-1) gesteuert wird, ein jeweiliges Bremskraftsignal (f₁₁, f₁₂) an die wenigstens eine Bremseinheit (141-1; 141-2) erzeugt, das bewirkt, dass das wenigstens eine Druckelement eine verringerte Bremskraft anwendet, wenn der eigene Bewegungsparameter ausdrückt, dass die Bewegung (m₁) des Schienenwagens (111) einen kleineren Betrag hat als den, der durch den durchschnittlichen Bewegungsparameter (m_{avg}) ausgedrückt wird.

7. Bremssystem nach einem der Ansprüche 5 oder 6, wobei jede der Steuereinheiten (121-1, 121-2, 122-1, 122-2, 12n-1, 12n-2) konfiguriert ist, um das Steuersignal (c₁₁, c₁₂) derart zu erzeugen, dass es bewirkt, dass der Bremsaktuator (131₁ₐ, 131_{1b}), der von der jeweiligen einen Steuereinheit (121-1) gesteuert wird, ein Bremskraftsignal (f₁₁, f₁₂) an die wenigstens eine Bremseinheit (141-1; 141-2) erzeugt, das bewirkt, dass das wenigstens eine Druckelement eine gleichbleibende Bremskraft anwendet, wenn der eigene Bewegungsparameter ausdrückt, dass die Bewegung (m₁) des Schienenwagens (111) einen gleich großen Betrag wie den, der durch den durchschnittlichen Bewegungsparameter (m_{avg}) ausgedrückt wird, hat.

8. Bremssystem nach einem der Ansprüche 3 bis 7, wobei das Schienenfahrzeug einen zweiten Kommunikationsbus (152) aufweist, der konfiguriert ist, um die Bewegungsparameter, welche die jeweiligen Bewegungen (m₁, m₂, mₙ) der in dem Schienenfahrzeug enthaltenen Schienenwagen (111, 112, 11n) ausdrücken, zwischen den Schienenwagen (111, 112, 11n) auszutauschen.

9. Bremssystem nach einem der vorhergehenden Ansprüche, wobei jeder der wenigstens zwei in dem Schienenfahrzeug enthaltenen Schienenwagen (111, 112, 11n) wenigstens eine jeweilige Batterieeinheit (161, 162, 16n) aufweist, die konfiguriert ist, um elektrische Energie an die Steuereinheiten (121-1, 121-2, 122-1, 122-2, 12n-1, 12n-2) und die Bremsaktuatoren (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}), die in dem gleichen Schienenwagen wie die wenigstens eine jeweilige Batterieeinheit enthalten sind, bereitzustellen.

10. Bremssystem nach Anspruch 9, wobei jeder der wenigstens zwei in dem Schienenfahrzeug enthaltenen Schienenwagen (111, 112, 11n) wenigstens ein Batterieladegerät aufweist, das konfiguriert ist, um die wenigstens eine jeweilige Batterieeinheit (161, 162, 16n) während des Betriebs des Schienenfahrzeugs zu laden.

11. Bremssystem nach einem der vorhergehenden Ansprüche, wobei das Eingangs-Bremssignal (B) ansprechend auf einen Betriebsbremsbefehl und/oder einen Notbremsbefehl und/oder einen Parkbremsbefehl erzeugt wurde.

12. Bremssystem nach einem der vorhergehenden Ansprüche, wobei:
jedes des wenigstens einen Rads (221), für das einer der Bremsaktuatoren (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}) konfiguriert ist, um seine Drehzahl (ω) zu verringern, ein Rad (221) ist, dessen Drehung von einem Messmodul (214) überwacht wird, welches konfiguriert ist, um ein Schlupfsignal (s₁₁), das ein Maß des Schlupfes des wenigstens einen Rads (221) widerspiegelt, zu erzeugen, und
jeder der Bremsaktuatoren (131₁ₐ) konfiguriert ist, um das Schlupfsignal (s₁₁) zu empfangen, und der Bremsaktuator (131₁ₐ) konfiguriert ist, um, wenn das Maß des Schlupfes einen Schwellwert überschreitet, das Bremskraftsignal (f₁₁) derart zu erzeugen, dass die Bremseinheit (141-1) bewirkt, dass das Druckelement eine Bremskraft auf das drehbare Element anwendet, wobei diese Bremskraft geringer als eine durch das empfangene Steuersignal (c₁₁) bestimmte Bremskraft ist.

13. Computerimplementiertes Verfahren zum Abbremsen eines Schienenfahrzeugs, das wenigstens zwei Schienenwagen (111, 112, 11n) aufweist, wobei jeder von ihnen aufweist: wenigstens eine Steuereinheit (121-1, 121-2, 122-1, 122-2, 12n-1, 12n-2), wenigstens einen Bremsaktuator (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}) und wenigstens eine Bremseinheit (141-1, 141-2, 141-3, 141-4, 142-1, 142-2, 142-3, 142-4, 14n-1, 14n-2, 14n-3, 14n-4), wobei das Verfahren aufweist:
Empfangen eines Eingangs-Bremssignals (B) in jeder der Steuereinheiten (121-1, 121-2, 122-1, 122-2, 12n-1, 12n-2),
ansprechend auf das Eingangs-Bremssignal (B) Erzeugen eines jeweiligen Steuersignals (cn, c₁₂, c₁₃, c₁₄, c₂₁, c₂₂, c₂₃, c₂₄, cₙ₁, cₙ₂, cₙ₃, cₙ₄) in jeder der Steuereinheiten;
Empfangen jedes der jeweiligen Steuersignale (c₁₁, c₁₂, c₁₃, c₁₄, c₂₁, c₂₂, c₂₃, c₂₄, cₙ₁, cₙ₂, cₙ₃, cₙ₄) in einem der Bremsaktuatoren (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}), der in dem gleichen Schienenwagen wie die Steuereinheit, die das Steuersignal erzeugt hat, enthalten ist,
basierend auf dem Steuersignal (c₁₁, c₁₂, c₁₃, c₁₄, c₂₁, c₂₂, c₂₃, c₂₄, cₙ₁, cₙ₂, cₙ₃, cₙ₄) Erzeugen eines jeweiligen ein Bremskraftsignals (f₁₁, f₁₂, f₁₃, f₁₄, f₂₁, f₂₂, f₂₃, f₂₄, fₙ₁, fₙ₂, fₙ₃, fₙ₄);
Empfangen jedes der jeweiligen Bremskraftsignale (f₁₁, f₁₂, f₁₃, f₁₄, f₂₁, f₂₂, f₂₃, f₂₄, fₙ₁, fₙ₂, fₙ₃, fₙ₄) in einer der Bremseinheiten (141-1, 141-2, 141-3, 141-4, 142-1, 142-2, 142-3, 142-4, 14n-1, 14n-2, 14n-3, 14n-4), die in dem gleichen Schienenwagen wie der Bremsaktuator, der das Bremskraftsignal erzeugt hat, enthalten ist, wobei jede Bremseinheit ein Druckelement und ein drehbares Element aufweist, die mit wenigstens einem Rad der wenigstens zwei Schienenwagen (111, 112, 11n) mechanisch verbunden sind, und
Bewirken, dass das Druckelement in jeder Bremseinheit eine Bremskraft auf das drehbare Element anwendet, um eine Drehzahl des wenigstens einen Rads des wenigstens einen Schienenwagens (111, 112, 11n) ansprechend auf das Bremskraftsignal zu verringern, **gekennzeichnet durch**:
Erzeugen des jeweiligen Steuersignals (c₁₁, c₁₂, c₁₃, c₁₄, c₂₁, c₂₂, c₂₃, c₂₄, cₙ₁, cₙ₂, cₙ₃, cₙ₄) auf der weiteren Basis wenigstens eines Bewegungsparameters (a_{X}, a_{y}, a_{z}, a_{R}, a_{P}, aw; ω), der eine jeweilige Bewegung (m₁, m₂, mₙ) jedes der wenigstens zwei Schienenwagen (111, 112, 11n) ausdrückt, in jeder der Steuereinheiten.

14. Verfahren nach Anspruch 13, das aufweist:
Verteilen des Eingangs-Bremssignals (B) in jeden der wenigstens zwei Schienenwagen (111, 112, 11n) über einen ersten Kommunikationsbus (151), der in dem Schienenfahrzeug enthalten ist.

15. Verfahren nach einem der Ansprüche 13 oder 14, das aufweist:
in jedem der wenigstens zwei Schienenwagen (111, 112, 11n) Erzeugen wenigstens eines Vektorsignals, das eine Beschleunigung (a_{X}, a_{y}, a_{z}, a_{R}, a_{P}, a_{W}) des Schienenwagens in wenigstens einer Dimension darstellt, wobei das wenigstens eine Vektorsignal mittels wenigstens eines Beschleunigungsmessers (211) erzeugt wird und das wenigstens eine Vektorsignal die jeweilige Bewegung (m₁, m₂, mₙ) des Schienenwagens darstellt, und
Erzeugen des Steuersignals (c₁₁, c₁₂, c₁₃, c₁₄, c₂₁, c₂₂, c₂₃, c₂₄, cₙ₁, cₙ₂, cₙ₃, cₙ₄) basierend auf dem wenigstens einen Vektorsignal.

16. Verfahren nach einem der Ansprüche 13 bis 15, das aufweist:
in jedem der wenigstens zwei Schienenwagen (111, 112, 11n) Erzeugen wenigstens eines Drehzahlsignals (s_{ω}), das eine jeweilige Drehzahl (ω) eines Rads (221) des Schienenwagens darstellt, wobei das wenigstens eine Drehzahlsignal (s_{ω}) von wenigstens einem Drehzahlsensor (212) erzeugt wird und das wenigstens eine Drehzahlsignal (s_{ω}) die Bewegung (m₁, m₂, mₙ) des Schienenwagens darstellt, und
Erzeugen des Steuersignals (c₁₁, c₁₂, c₁₃, c₁₄, c₂₁, c₂₂, c₂₃, c₂₄, cₙ₁, cₙ₂, cₙ₃, cₙ₄) basierend auf dem wenigstens einen Drehzahlsignal (s_{ω}).

17. Verfahren nach einem der Ansprüche 13 bis 16, das ferner aufweist:
Empfangen wenigstens eines des wenigstens einen Bewegungsparameters, der die jeweilige Bewegung (m₂, mₙ) eines jeden anderen in dem Schienenfahrzeug enthaltenen Schienenwagens ausdrückt, in jeder der Steuereinheiten (121-1, 121-2, 122-1, 122-2, 12n-1, 12n-2);
Bestimmen eines durchschnittlichen Bewegungsparameters (m_{avg}) in jeder der Steuereinheiten (121-1, 121-2, 122-1, 122-2, 12n-1, 12n-2) basierend auf dem wenigstens einen empfangenen Bewegungsparameter und einem eigenen Bewegungsparameter, der die Bewegung (m₁) des Schienenwagens, in dem die jeweilige eine Steuereinheit (121-1) enthalten ist, ausdrückt, und
Erzeugen des Steuersignals (c₁₁, c₁₂) in jeder der Steuereinheiten (121-1, 121-2, 122-1, 122-2, 12n-1, 12n-2) derart, dass es bewirkt, dass der Bremsaktuator (131₁ₐ, 131_{1b}), der von der Steuereinheit (121-1) gesteuert wird, ein jeweiliges Bremskraftsignal (f₁₁, f₁₂) an die wenigstens eine Bremseinheit (141-1; 141-2) erzeugt, das bewirkt, dass das wenigstens eine Druckelement eine erhöhte Bremskraft anwendet, wenn der eigene Bewegungsparameter ausdrückt, dass die Bewegung (m₁) des Schienenwagens (111) einen größeren Betrag hat als den, der durch den durchschnittlichen Bewegungsparameter (m_{avg}) ausgedrückt wird.

18. Verfahren nach Anspruch 17, das ferner aufweist:
Erzeugen des Steuersignals (c₁₁, c₁₂) in jeder der Steuereinheiten (121-1, 121-2, 122-1, 122-2, 12n-1, 12n-2) derart, dass es bewirkt, dass der Bremsaktuator (131₁ₐ, 131_{1b}), der von der Steuereinheit (121-1) gesteuert wird, ein jeweiliges Bremskraftsignal (f₁₁, f₁₂) an die wenigstens eine Bremseinheit (141-1; 141-2) erzeugt, das bewirkt, dass das wenigstens eine Druckelement eine erhöhte Bremskraft anwendet, wenn der eigene Bewegungsparameter ausdrückt, dass die Bewegung (m₁) des Schienenwagens (111) einen größeren Betrag hat als den, der durch den durchschnittlichen Bewegungsparameter (m_{avg}) ausgedrückt wird, und eine verringerte Bremskraft, wenn der eigene Bewegungsparameter ausdrückt, dass die Bewegung (m₁) des Schienenwagens (111) einen kleineren Betrag hat als den, der durch den durchschnittlichen Bewegungsparameter (m_{avg}) ausgedrückt wird.

19. Verfahren nach einem der Ansprüche 17 bis 18, das ferner aufweist:
Erzeugen des Steuersignals (c₁₁, c₁₂) in jeder der Steuereinheiten (121-1, 121-2, 122-1, 122-2, 12n-1, 12n-2) derart, dass es bewirkt, dass der Bremsaktuator (131₁ₐ, 131_{1b}), der von der Steuereinheit (121-1) gesteuert wird, ein jeweiliges Bremskraftsignal (f₁₁, f₁₂) an die wenigstens eine Bremseinheit (141-1; 141-2) erzeugt, das bewirkt, dass das wenigstens eine Druckelement eine erhöhte Bremskraft anwendet, wenn der eigene Bewegungsparameter ausdrückt, dass die Bewegung (m₁) des Schienenwagens (111) einen größeren Betrag hat als den, der durch den durchschnittlichen Bewegungsparameter (m_{avg}) ausgedrückt wird, und eine gleichbleibende Bremskraft, wenn der eigene Bewegungsparameter ausdrückt, dass die Bewegung (m₁) des Schienenwagens (111) einen gleich großen Betrag hat wie den des durchschnittlichen Bewegungsparameters (m_{avg}).

20. Verfahren nach einem der Ansprüche 15 bis 19, das aufweist: Austauschen der Bewegungsparameter, welche die jeweiligen Bewegungen (m₁, m₂, mₙ) der in dem Schienenfahrzeug enthaltenen Schienenwagen (111, 112, 11n) ausdrücken, zwischen den Schienenwagen (111, 112, 11n) über einen zweiten Kommunikationsbus (152), der in dem Schienenfahrzeug enthalten ist.

21. Verfahren nach einem der Ansprüche 13 bis 20, das aufweist: Erzeugen des Eingangs-Bremssignals (B) ansprechend auf einen Betriebsbremsbefehl und/oder einen Notbremsbefehl und/oder einen Parkbremsbefehl.

22. Verfahren nach einem der Ansprüche 13 bis 21, das aufweist:
Erzeugen eines Schlupfsignals (s₁₁), das ein Maß des Schlupfes jedes des wenigstens einen Rads (221) widerspiegelt, für das einer der Bremsaktuatoren (131_{1a,} 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}) konfiguriert ist, um zu bewirken, dass seine Drehzahl (ω) verringert wird, wobei das Schlupfsignal (s₁₁) von einem Messmodul (214) erzeugt wird, das konfiguriert ist, um eine Drehung des wenigstens einen Rads (221) zu überwachen; und wenn sein Schlupfmaß einen Schwellwert überschreitet,
in dem Bremsaktuator (131₁ₐ) das Bremskraftsignal (f₁₁) derart zu erzeugen, dass die Bremseinheit (141-1) bewirkt, dass das Druckelement eine Bremskraft auf das drehbare Element anwendet, wobei diese Bremskraft geringer als eine durch das empfangene Steuersignal (c₁₁) bestimmte Bremskraft ist.

23. Computerprogramm (317; 417), das in einen nichtflüchtigen Datenträger (316; 416) ladbar ist, der kommunikationsfähig mit wenigstens einem Prozessor (315; 415) verbunden ist, wobei das Computerprogramm (317; 417) Software zum Ausführen der Verfahrensschritte aufweist, die durch die wenigstens eine Steuereinheit (121-1, 121-2, 122-1, 122-2, 12n-1, 12n-2) nach einem der Ansprüche 12 bis 22 durchgeführt werden sollen, wenn das Computerprogramm (317; 417) auf dem wenigstens einen Prozessor (315; 415) laufen gelassen wird.

24. Nichtflüchtiger Datenträger (316; 416), der das Computerprogramm (317; 417) des Anspruchs 23 enthält.

## Revendications

1. Système de freinage pour un véhicule ferroviaire comprenant au moins deux wagons de chemin de fer (111, 112, 11n), le système de freinage comprenant :
plusieurs unités de commande (121-1, 121-2, 122-1, 122-2, 12n-1, 12n-2) dont au moins une est agencée dans chacun des au moins deux wagons de chemin de fer (111, 112, 11n), chacune desdites au moins deux unités de commande étant configurée pour recevoir un signal d'entrée de frein (B), et en réponse à celui-ci générer un signal de commande (c₁₁, c₁₂, c₁₃, c₁₄, c₂₁, c₂₂, c₂₃, c₂₄, cₙ₁, cₙ₂, cₙ₃, cₙ₄) ;
plusieurs actionneurs de frein (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}) agencés dans chacun des au moins deux wagons de chemin de fer, chacun de ces actionneurs de frein est configuré pour recevoir le signal de commande (c₁₁, c₁₂, c₁₃, c₁₄, c₂₁, c₂₂, c₂₃, c₂₄, Cₙ₁, cₙ₂, cₙ₃, cₙ₄) généré par l'une de l'au moins une unité de commande comprise dans le même wagon de chemin de fer que l'actionneur de frein, et sur la base du signal de commande, produire un signal de force de frein (f₁₁, f₁₂, f₁₃, f₁₄, f₂₁, f₂₂, f₂₃, f₂₄, fₙ₁, fₙ₂, fₙ₃, fₙ₄) ; et
plusieurs unités de frein (141-1, 141-2, 141-3, 141-4, 142-1, 142-2, 142-3, 142-4, 14n-1, 14n-2, 14n-3, 14n-4) comprenant chacune un élément d'appui et un élément rotatif qui est mécaniquement relié à au moins une roue de l'un des au moins deux wagons de chemin de fer (111, 112, 11n), chacune de ces unités de frein est configurée pour recevoir le signal de force de frein (f₁₁, f₁₂, f₁₃, f₁₄, f₂₁, f₂₂, f₂₃, f₂₄, fₙ₁, fₙ₂, fₙ₃, fₙ₄) produit par l'actionneur de frein compris dans le même wagon de chemin de fer que l'unité de frein, et en réponse au signal de force de frein, amener l'élément d'appui à appliquer une force de freinage sur l'élément rotatif de manière à réduire une vitesse de rotation de l'au moins une roue, **caractérisé en ce que** l'au moins une unité de commande (121-1, 121-2, 122-1, 122-2, 12n-1, 12n-2) est configurée pour générer le signal de commande (c₁₁, c₁₂, c₁₃, c₁₄, c₂₁, c₂₂, c₂₃, c₂₄, Cₙ₁, cₙ₂, cₙ₃, cₙ₄) sur la base supplémentaire d'au moins un paramètre de déplacement (aₓ, a_{Y}, a_{Z}, a_{R}, a_{P}, a_{W} ; ω) exprimant un mouvement (m₁, m₂, mₙ) respectif de chacun des au moins deux wagons de chemin de fer (111, 112, 11n).

2. Système de freinage selon la revendication 1, dans lequel le véhicule ferroviaire comprend un premier bus de communication (151) configuré pour transmettre le signal d'entrée de frein (B) à chacun des au moins deux wagons de chemin de fer (111, 112, 11n).

3. Système de freinage selon l'une quelconque des revendications 1 ou 2, dans lequel :
chacun des au moins deux wagons de chemin de fer (111, 112, 11n) comprend au moins un accéléromètre (211) configuré pour produire au moins un signal vectoriel représentant une accélération (aₓ, ay, a_{Z}, a_{R}, ap, a_{W}) dans au moins une dimension du wagon de chemin de fer dans lequel l'au moins un accéléromètre (211) est compris, lequel au moins un signal vectoriel exprime le mouvement (m₁, m₂, mₙ) respectif dudit wagon de chemin de fer, et
l'au moins une unité de commande (121-1, 121-2, 122-1, 122-2, 12n-1, 12n-2) est configurée pour recevoir l'au moins un signal vectoriel, et sur la base de celui-ci générer le signal de commande (c₁₁, c₁₂, c₁₃, c₁₄, c₂₁, c₂₂, c₂₃, c₂₄, cₙ₁, cₙ₂, cₙ₃, Cₙ₄).

4. Système de freinage selon l'une quelconque des revendications précédentes, dans lequel :
chacun des au moins deux wagons de chemin de fer (111, 112, 11n) comprend au moins un capteur de vitesse de rotation (212) configuré pour produire au moins un signal de vitesse (s_{ω}) représentant une vitesse (ω) respective d'une roue (221) du wagon de chemin de fer dans lequel l'au moins un capteur de vitesse de rotation (212) est compris, lequel au moins un signal de vitesse (s_{ω}) exprime le mouvement (m₁, m₂, mₙ) dudit wagon de chemin de fer, et
l'au moins une unité de commande (121-1, 121-2, 122-1, 122-2, 12n-1, 12n-2) dans ledit wagon de chemin de fer est configurée pour recevoir l'au moins un signal de vitesse (s_{ω}), et sur la base de celui-ci générer le signal de commande (c₁₁, c₁₂, c₁₃, c₁₄, c₂₁, c₂₂, c₂₃, c₂₄, cₙ₁, cₙ₂, cₙ₃, cₙ₄).

5. Système de freinage selon l'une quelconque des revendications précédentes, dans lequel chacune desdites unités de commande (121-1, 121-2, 122-1, 122-2, 12n-1, 12n-2) est configurée pour :
recevoir au moins un parmi l'au moins un paramètre de déplacement exprimant le mouvement (m₂, mₙ) respectif de chaque autre wagon de chemin de fer compris dans le véhicule ferroviaire ;
déterminer un paramètre de déplacement moyen (m_{avg}) sur la base de l'au moins un paramètre de déplacement reçu et d'un propre paramètre de déplacement exprimant le mouvement (m₁) du wagon de chemin de fer dans lequel ladite une unité de commande (121-1) respective est comprise ; et
générer le signal de commande (c₁₁, c₁₂) de telle sorte qu'il amène l'actionneur de frein (131₁ₐ, 131_{1b}) commandé par ladite une unité de commande (121-1) respective à produire un signal de force de frein (f₁₁, f₁₂) respectif à destination de l'au moins une unité de frein (141-1; 141-2) amenant l'au moins un élément d'appui à appliquer une force de freinage accrue, si le propre paramètre de déplacement exprime que le mouvement (m₁) du wagon de chemin de fer (111) a une ampleur supérieure à ce qui est exprimé par le paramètre de déplacement moyen (m_{avg}).

6. Système de freinage selon la revendication 5, dans lequel chacune desdites unités de commande (121-1, 121-2, 122-1, 122-2, 12n-1, 12n-2) est configurée pour générer le signal de commande (c₁₁, c₁₂) de telle sorte qu'il amène l'actionneur de frein (131₁ₐ, 131_{1b}) commandé par ladite une unité de commande (121-1) respective à produire un signal de force de frein (f₁₁, f₁₂) respectif à destination de l'au moins une unité de frein (141-1; 141-2) amenant l'au moins un élément d'appui à appliquer une force de freinage abaissée, si le propre paramètre de déplacement exprime que le mouvement (m₁) du wagon de chemin de fer (111) a une ampleur inférieure à ce qui est exprimé par le paramètre de déplacement moyen (m_{avg}).

7. Système de freinage selon l'une quelconque des revendications 5 ou 6, dans lequel chacune desdites unités de commande (121-1, 121-2, 122-1, 122-2, 12n-1, 12n-2) est configurée pour générer le signal de commande (c₁₁, c₁₂) de telle sorte qu'il amène l'actionneur de frein (131₁ₐ, 131_{1b}) commandé par ladite une unité de commande (121-1) respective à produire un signal de force de frein (f₁₁, f₁₂) à destination de l'au moins une unité de frein (141-1 ; 141-2) amenant l'au moins un élément d'appui à appliquer une force de freinage maintenue, si le propre paramètre de déplacement exprime que le mouvement (m₁) du wagon de chemin de fer (111) a une ampleur égale à ce qui est exprimé par le paramètre de déplacement moyen (m_{avg}).

8. Système de freinage selon l'une quelconque des revendications 3 à 7, dans lequel le véhicule ferroviaire comprend un deuxième bus de communication (152) configuré pour échanger les paramètres de déplacement exprimant les mouvements (m₁, m₂, mₙ) respectifs des wagons de chemin de fer (111, 112, 11n) compris dans le véhicule ferroviaire entre lesdits wagons de chemin de fer (111, 112, 11n).

9. Système de freinage selon l'une quelconque des revendications précédentes, dans lequel chacun des au moins deux wagons de chemin de fer (111, 112, 11n) compris dans le véhicule ferroviaire comprend au moins une unité de batterie (161, 162, 16n) respective configurée pour fournir une énergie électrique aux unités de commande (121-1, 121-2, 122-1, 122-2, 12n-1, 12n-2) et aux actionneurs de frein (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}) compris dans le même wagon de chemin de fer que l'au moins une unité de batterie respective.

10. Système de freinage selon la revendication 9, dans lequel chacun des au moins deux wagons de chemin de fer (111, 112, 11n) compris dans le véhicule ferroviaire comprend au moins un chargeur de batterie configuré pour charger l'au moins une unité de batterie (161, 162, 16n) respective durant le fonctionnement du véhicule ferroviaire.

11. Système de freinage selon l'une quelconque des revendications précédentes, dans lequel le signal d'entrée de frein (B) a été généré en réponse à au moins une parmi une instruction de frein de service, une instruction de frein de secours et une instruction de frein de stationnement.

12. Système de freinage selon l'une quelconque des revendications précédentes, dans lequel :
chacune de l'au moins une roue (221) dont la vitesse (ω) de rotation que l'un desdits actionneurs de frein (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}) est configuré pour amener à être réduite est une roue (221) dont la rotation est surveillée par un module de mesure (214) configuré pour produire un signal de patinage (s₁₁) reflétant un degré de patinage de l'au moins une roue (221), et
chacun desdits actionneurs de frein (131₁ₐ) est configuré pour recevoir le signal de patinage (s₁₁), et si le degré de patinage dépasse une valeur de seuil, l'actionneur de frein (131₁ₐ) est configuré pour produire le signal de force de frein (fn) de telle sorte que l'unité de frein (141-1) amène l'élément d'appui à appliquer une force de freinage sur l'élément rotatif, laquelle force de freinage est inférieure à une force de freinage désignée par le signal de commande (c₁₁) reçu.

13. Procédé mis en oeuvre par ordinateur consistant à ralentir un véhicule ferroviaire comprenant au moins deux wagons de chemin de fer (111, 112, 11n) dont chacun comprend : au moins une unité de commande (121-1, 121-2, 122-1, 122-2, 12n-1, 12n-2), au moins un actionneur de frein (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}) et au moins une unité de frein (141-1, 141-2, 141-3, 141-4, 142-1, 142-2, 142-3, 142-4, 14n-1, 14n-2, 14n-3, 14n-4), le procédé comprenant :
la réception d'un signal d'entrée de frein (B) dans chacune desdites unités de commande (121-1, 121-2, 122-1, 122-2, 12n-1, 12n-2),
la génération, dans chacune desdites unités de commande, d'un signal de commande (c₁₁, c₁₂, c₁₃, c₁₄, c₂₁, c₂₂, c₂₃, c₂₄, cₙ₁, cₙ₂, cₙ₃, cₙ₄) respectif en réponse au signal d'entrée de frein (B) ;
la réception de chacun des signaux de commande (c₁₁, c₁₂, c₁₃, c₁₄, c₂₁, c₂₂, c₂₃, c₂₄, cₙ₁, cₙ₂, cₙ₃, cₙ₄) respectifs dans l'un des actionneurs de frein (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}) compris dans le même wagon de chemin de fer que l'unité de commande qui a produit le signal de commande,
la production, dans chacun des actionneurs de frein, d'un signal de force de frein (f₁₁, f₁₂, f₁₃, f₁₄, f₂₁, f₂₂, f₂₃, f₂₄, fₙ₁, fₙ₂, fₙ₃, fₙ₄) sur la base du signal de commande (c₁₁, c₁₂, c₁₃, c₁₄, c₂₁, c₂₂, c₂₃, c₂₄, cₙ₁, cₙ₂, cₙ₃, cₙ₄) ;
la réception de chacun des signaux de force de frein (f₁₁, f₁₂, f₁₃, f₁₄, f₂₁, f₂₂, f₂₃, f₂₄, fₙ₁, fₙ₂, fₙ₃, fₙ₄) respectifs dans l'une des unités de frein (141-1, 141-2, 141-3, 141-4, 142-1, 142-2, 142-3, 142-4, 14n-1, 14n-2, 14n-3, 14n-4) comprise dans le même wagon de chemin de fer que l'actionneur de frein qui a produit le signal de force de frein, chaque unité de frein comprenant un élément d'appui et un élément rotatif qui est mécaniquement relié à au moins une roue des au moins deux wagons de chemin de fer (111, 112, 11n), et
le fait d'amener, dans chaque unité de frein, l'élément d'appui à appliquer une force de freinage sur l'élément rotatif de manière à réduire une vitesse de rotation de l'au moins une roue de l'au moins un wagon de chemin de fer (111, 112, 11n) en réponse au signal de force de frein,
**caractérisé par**
la génération, dans chacune des unités de commande, du signal de commande (c₁₁, c₁₂, c₁₃, c₁₄, c₂₁, c₂₂, c₂₃, c₂₄, cₙ₁, cₙ₂, cₙ₃, cₙ₄) respectif sur la base supplémentaire d'au moins un paramètre de déplacement (aₓ, a_{Y}, a_{Z}, a_{P}, a_{P}, a_{W} ; ω) exprimant un mouvement (m₁, m₂, mₙ) respectif de chacun des au moins deux wagons de chemin de fer (111, 112, 11n).

14. Procédé selon la revendication 13, comprenant :
la transmission du signal d'entrée de frein (B) à chacun des au moins deux wagons de chemin de fer (111, 112, 11n) via un premier bus de communication (151) compris dans le véhicule ferroviaire.

15. Procédé selon l'une quelconque des revendications 13 ou 14, comprenant :
la production, dans chacun des au moins deux wagons de chemin de fer (111, 112, 11n), d'au moins un signal vectoriel représentant une accélération (aₓ, a_{Y}, a_{Z}, a_{P}, a_{P}, a_{W}) du wagon de chemin de fer dans au moins une dimension, l'au moins un signal vectoriel étant produit au moyen d'au moins un accéléromètre (211) et l'au moins un signal vectoriel exprimant le mouvement (m₁, m₂, mₙ) respectif du wagon de chemin de fer ; et
la génération du signal de commande (c₁₁, c₁₂, c₁₃, c₁₄, c₂₁, c₂₂, c₂₃, c₂₄, cₙ₁, cₙ₂, cₙ₃, cₙ₄) sur la base de l'au moins un signal vectoriel.

16. Procédé selon l'une quelconque des revendications 13 à 15, comprenant :
la production, dans chacun des au moins deux wagons de chemin de fer (111, 112, 11n), d'au moins un signal de vitesse (s_{ω}) représentant une vitesse (ω) respective d'une roue (221) du wagon de chemin de fer, l'au moins un signal de vitesse (s_{ω}) étant produit par au moins un un capteur de vitesse de rotation (212) et l'au moins un signal de vitesse (s_{ω}) exprimant le mouvement (m₁, m₂, mₙ) du wagon de chemin de fer, et
la génération du signal de commande (c₁₁, c₁₂, c₁₃, c₁₄, c₂₁, c₂₂, c₂₃, c₂₄, cₙ₁, cₙ₂, cₙ₃, cₙ₄) sur la base de l'au moins un signal de vitesse (s_{ω}).

17. Procédé selon l'une quelconque des revendications 13 à 16, comprenant en outre :
la réception, dans chacune des unités de commande (121-1, 121-2, 122-1, 122-2, 12n-1, 12n-2), d'au moins un parmi l'au moins un paramètre de déplacement exprimant le mouvement (m₂, mₙ) respectif de chaque autre wagon de chemin de fer compris dans le véhicule ferroviaire ;
la détermination, dans chacune des unités de commande (121-1, 121-2, 122-1, 122-2, 12n-1, 12n-2), d'un paramètre de déplacement moyen (m_{avg}) sur la base de l'au moins un paramètre de déplacement reçu et d'un propre paramètre de déplacement exprimant le mouvement (m₁) du wagon de chemin de fer dans lequel ladite une unité de commande (121-1) respective est comprise ; et
la génération, dans chacune des unités de commande (121-1, 121-2, 122-1, 122-2, 12n-1, 12n-2), du signal de commande (c₁₁, c₁₂) de telle sorte qu'il amène l'actionneur de frein (131₁ₐ, 131_{1b}) commandé par l'unité de commande (121-1) à produire un signal de force de frein (f₁₁, f₁₂) respectif à destination de l'au moins une unité de frein (141-1; 141-2) amenant l'au moins un élément d'appui à appliquer une force de freinage accrue, si le propre paramètre de déplacement exprime que le mouvement (m₁) du wagon de chemin de fer (111) a une ampleur supérieure au paramètre de déplacement moyen (m_{avg}).

18. Procédé selon la revendication 17, comprenant en outre :
la génération, dans chacune des unités de commande (121-1, 121-2, 122-1, 122-2, 12n-1, 12n-2), du signal de commande (c₁₁, c₁₂) de telle sorte qu'il amène l'actionneur de frein (131₁ₐ, 131_{1b}) commandé par l'unité de commande (121-1) à produire un signal de force de frein (f₁₁, f₁₂) respectif à destination de l'au moins une unité de frein (141-1; 141-2) amenant l'au moins un élément d'appui à appliquer une force de freinage accrue, si le propre paramètre de déplacement exprime que le mouvement (m₁) du wagon de chemin de fer (111) a une ampleur supérieure au paramètre de déplacement moyen (m_{avg}), une force de freinage abaissée, si le propre paramètre de déplacement exprime que le mouvement (m₁) du wagon de chemin de fer (111) a une ampleur inférieure au paramètre de déplacement moyen (m_{avg}).

19. Procédé selon l'une quelconque des revendications 17 ou 18, comprenant en outre :
la génération, dans chacune des unités de commande (121-1, 121-2, 122-1, 122-2, 12n-1, 12n-2), du signal de commande (c₁₁, c₁₂) de telle sorte qu'il amène l'actionneur de frein (131₁ₐ, 131_{1b}) commandé par l'unité de commande (121-1) à produire un signal de force de frein (f₁₁, f₁₂) respectif à destination de l'au moins une unité de frein (141-1; 141-2) amenant l'au moins un élément d'appui à appliquer une force de freinage accrue, si le propre paramètre de déplacement exprime que le mouvement (m₁) du wagon de chemin de fer (111) a une ampleur supérieure au paramètre de déplacement moyen (m_{avg}), une force de freinage maintenue, si le propre paramètre de déplacement exprime que le mouvement (m₁) du wagon de chemin de fer (111) a une ampleur égale au paramètre de déplacement moyen (m_{avg}).

20. Procédé selon l'une quelconque des revendications 15 à 19, comprenant l'échange des paramètres de déplacement exprimant les mouvements (m₁, m₂, mₙ) respectifs des wagons de chemin de fer (111, 112, 11n) compris dans le véhicule ferroviaire entre les wagons de chemin de fer (111, 112, 11n) via un deuxième bus de communication (152) compris dans le véhicule ferroviaire.

21. Procédé selon l'une quelconque des revendications 13 à 20, comprenant la génération du signal d'entrée de frein (B) en réponse à au moins une parmi une instruction de frein de service, une instruction de frein de secours et une instruction de frein de stationnement.

22. Procédé selon l'une quelconque des revendications 13 à 21, comprenant :
la production d'un signal de patinage (s₁₁) reflétant un degré de patinage de chacune de l'au moins une roue (221) ayant une vitesse (ω) de rotation que l'un desdits actionneurs de frein (131₁ₐ, 131_{1b}, 131₂ₐ, 131_{2b}, 131₁ₐ, 131_{1b}, 131₂ₐ, 131_{2b}, 13n₁ₐ, 13n_{1b}, 13n₂ₐ, 13n_{2b}) est configuré pour amener à être réduite, le signal de patinage (s₁₁) étant produit par un module de mesure (214) configuré pour surveiller une rotation de l'au moins une roue (221) ; et si le degré de patinage de celle-ci dépasse une valeur de seuil
la production, dans l'actionneur de frein (131₁ₐ), du signal de force de frein (f₁₁) de telle sorte que l'unité de frein (141-1) amène l'élément d'appui à appliquer une force de freinage sur l'élément rotatif, laquelle force de freinage est inférieure à une force de freinage désignée par le signal de commande (c₁₁) reçu.

23. Programme d'ordinateur (317 ; 417) chargeable dans un support de données non volatil (316 ; 416) connecté de manière à communiquer à au moins un processeur (315 ; 415), le programme d'ordinateur (317 ; 417) comprenant un logiciel pour exécuter les étapes de procédé devant être réalisées par l'au moins une unité de commande (121-1, 121-2, 122-1, 122-2, 12n-1, 12n-2) selon l'une quelconque des revendications 13 à 22 lorsque le programme d'ordinateur (317 ; 417) tourne sur l'au moins un processeur (315 ; 415).

24. Support de données non volatil (316 ; 416) contenant le programme d'ordinateur (317 ; 417) selon la revendication 23.
